(19) Europäisches Patentamt
European Patent Office
Office européen des brevets

(11) **EP 4 118 354 B1**

(12) **EUROPÄISCHE PATENTSCHRIFT**

(45) Veröffentlichungstag und Bekanntmachung des Hinweises auf die Patenterteilung:
**26.03.2025 Patentblatt 2025/13**

(21) Anmeldenummer: **21707220.6**

(22) Anmeldetag: **19.02.2021**

(51) Internationale Patentklassifikation (IPC):
*F16D 13/58* (2006.01)

(52) Gemeinsame Patentklassifikation (CPC):
**F16D 13/583;** F16D 2300/14

(86) Internationale Anmeldenummer:
**PCT/EP2021/054119**

(87) Internationale Veröffentlichungsnummer:
**WO 2021/180445 (16.09.2021 Gazette 2021/37)**

(54) **TELLERFEDERKUPPLUNG**

DIAPHRAGM CLUTCH

EMBRAYAGE À DIAPHRAGME

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.03.2020 DE 102020001569**

(43) Veröffentlichungstag der Anmeldung:
**18.01.2023 Patentblatt 2023/03**

(73) Patentinhaber: **Diehl Metall Stiftung & Co. KG 90552 Röthenbach (DE)**

(72) Erfinder: **SKUBACZ, Tobias 90571 Schwaig (DE)**

(74) Vertreter: **Diehl Patentabteilung c/o Diehl Stiftung & Co. KG Stephanstraße 49 90478 Nürnberg (DE)**

(56) Entgegenhaltungen:
DE-A1- 102008 002 500    DE-A1- 102008 002 500
US-A1- 2010 304 912      US-A1- 2010 304 912

**Beschreibung**

Die Erfindung betrifft eine Tellerfederkupplung, insbesondere zur Verwendung im Antriebsstrang eines Kraftfahrzeugs oder dgl. Die Erfindung betrifft insbesondere eine bistabile Schaltkupplung mit einer Tellerfeder.

Tellerfederkupplungen sind nach dem Stand der Technik allgemein bekannt. Es wird beispielsweise verwiesen auf die DE 10 2014 226 520 A1.

Bei den bekannten Tellerfederkupplungen wird eine Schließkraft zur Verbindung zweier Wellen durch eine Tellerfeder erzeugt. Die Tellerfeder zwingt ein mit der einen Welle verbundenes erstes Kupplungselement gegen ein dazu korrespondierendes zweites Kupplungselement, welches drehfest mit der zweiten Welle verbunden ist. Zum Trennen der Kupplungselemente muss entgegen der Wirkung der Tellerfeder eine äußere Kraft aufgebracht werden. Die herkömmliche Tellerfederkupplung trennt, so lange die äußere Kraft auf die Tellerfeder wirkt, sie schließt, solange keine äußere Kraft einwirkt. Man bezeichnet eine solche Kupplung auch als NC (= "normally closed")-Kupplung. Die bekannte Tellerfederkupplung ist nicht besonders energieeffizient, da zur Aufrechterhaltung des getrennten bzw. geöffneten Zustands ständig eine äußere Kraft aufgewendet werden muss.

Neben NC-Kupplungen sind auch sogenannte NO (= "normally open")-Kupplungen bekannt. Die DE 10 2016 222 739 A1 offenbart eine solche NO-Kupplung. Zur Übertragung eines Drehmoments muss bei einer solchen Kupplung ständig eine hohe Kraft aufgebracht werden, so dass diese Kupplung nicht besonders energieeffizient ist.

US 2010/304912 A1 und DE 10 2008 002500 A1 zeigen weitere Tellerfederkupplungen aus dem Stand der Technik.

Aufgabe der Erfindung ist es, die Nachteile nach dem Stand der Technik zu beseitigen. Es soll insbesondere eine Tellerfederkupplung mit verbesserter Energieeffizienz angegeben werden. Nach einem weiteren Ziel der Erfindung soll die Tellerfederkupplung bei Überlast eine Relativbewegung der Wellen ermöglichen.

Diese Aufgabe wird durch die Merkmale des Patentanspruchs 1 gelöst. Zweckmäßige Ausgestaltungen der Erfindung ergeben sich aus den Merkmalen der abhängigen Patentansprüche.

Nach Maßgabe der Erfindung wird eine Tellerfederkupplung zum wahlweisen Verbinden einer ersten und einer zweiten Welle, insbesondere einer Antriebs- und einer Abtriebswelle, vorgeschlagen, umfassend eine bistabile Tellerfederanordnung, mit welcher ohne Aufbringung einer äußeren Kraft sowohl ein eine kraftschlüssige Verbindung zwischen den beiden Wellen herstellender geschlossener Zustand als auch ein die beiden Wellen voneinander trennender geöffneter Zustand aufrechterhalten wird.

Indem erfindungsgemäß eine bistabile Tellerfederanordnung verwendet wird, kann sowohl der geschlossene als auch der geöffnete Zustand ohne Aufbringung einer äußeren Kraft aufrechterhalten werden. Die vorgeschlagene Tellerfederkupplung weist eine verbesserte Energieeffizienz auf. Überdies lässt sich die vorgeschlagene Tellerfederkupplung einfach herstellen.

Die Tellerfederanordnung umfasst zumindest eine Tellerfeder. Es ist auch denkbar, mehrere Tellerfedern nach Art eines Tellerfederstapels zu verwenden.

Nach einer vorteilhaften Ausgestaltung gilt für die Tellerfeder folgende Beziehung:

$$h_0/t > 2{,}83,$$

wobei t eine Materialdicke der Tellerfeder ist. $h_0$ ist eine rechnerische Hilfsgröße. Es gilt $h_0 = l_0 - t$, wobei $l_0$ die unbelastete Bauhöhe der Tellerfeder ist. Es hat sich gezeigt, dass eine die vorstehende Beziehung erfüllende Tellerfeder "bistabil" ist. D. h. bei Aufbringen einer äußeren Kraft auf die Tellerfeder wird ausgehend von einem ersten stabilen Zustand deren Höhe l vermindert, bis die Tellerfeder einen instabilen Zustand erreicht. Im instabilen Zustand ist die äußere Kraft Null. Bei weiterer Aufbringung einer äußeren Kraft wird die Höhe l weiter vermindert. Es bildet sich selbstständig ein "negativer Kegelstumpf" aus, d. h. die Tellerfeder schnappt selbstständig in einen zweiten stabilen Zustand.

Vorteilhafterweise weist die Tellerfeder mehrere sich zu ihrem Innen- oder Außenumfang radial erstreckende Federzungen auf. In dieser Ausgestaltung ist eine Zustandsänderung der Tellerfeder vom einen stabilen Zustand in den anderen stabilen Zustand mit verringertem Kraftaufwand möglich. Das ermöglicht die Verwendung einer einfachen und kostengünstigen Betätigungseinrichtung zum Aufbringen der äußeren Kraft.

Nach einer vorteilhaften Ausgestaltung ist ein an der ersten Welle angebrachtes erstes Kupplungselement als Konus und ein an der zweiten Welle angebrachtes zweites Kupplungselement als zum Konus korrespondierender Gegenkonus ausgebildet. In dieser Ausgestaltung ist es möglich, bei relativ geringer Baugröße hohe Drehmomente von der einen auf die andere Welle zu übertragen. Auch eine Anordnung aus mehreren Konen bzw. Gegenkonen ist möglich.

Nach einer weiteren Ausgestaltung ist es auch möglich, dass ein an der ersten Welle angebrachtes erstes Kupplungselement als Scheibe und ein an der zweiten Welle angebrachtes zweites Kupplungselement als zur Scheibe korrespondierende Gegenscheibe ausgebildet ist. Die vorgeschlagene Tellerfederkupplung kann auch als Lamellenkupplung ausgebildet sein, d. h. mehrere Reiblamellen, umfassen.

Erfindungsgemäß ist das zweite Kupplungselement drehfest und axial verschiebbar mit der zweiten Welle verbunden. Bei beiden vorgenannten Ausgestaltungen kann es sein, dass mehrere Konen und Gegenkonen bzw. Scheiben und Gegenscheiben vorgesehen sind, wodurch eine Parallelschaltung von Reibkontakten bewirkt wird. Eine solche Parallelschaltung von Reibkontakten ermöglicht die Übertragung besonders hoher Drehmomente. Die Auslösekraft der Tellerfederkupplung bleibt dabei unverändert.

Vorteilhafterweise ist am ersten und/oder zweiten Kupplungselement ein Reibbelag angebracht. Der Reibbelag kann in herkömmlicher Weise beispielsweise aus einem Karbonbelag, einem Papierbelag, aus Sintermessing, gepresstem Grafit oder dgl. gebildet sein.

Erfindungsgemäß ist ein innerer Umfangsrand der Tellerfeder in einer an der ersten Welle vorgesehenen ersten Nut drehbar gehalten. Der innere Umfangsrand der Tellerfeder kann durch die Enden der Federzungen gebildet sein. Ein äußerer Umfangsrand der Tellerfeder ist erfindungsgemäß in einer an einer Schaltmuffe vorgesehenen zweiten Nut gehalten. Dabei kann eine Flanke der zweiten Nut beispielsweise durch einen Federring gebildet sein. Die vorgeschlagene Konstruktion ist besonders einfach und kostengünstig umsetzbar.

Zweckmäßigerweise ist die Schaltmuffe mit dem zweiten Kupplungselement verbunden. Die Verbindung kann drehbar sein. Zum axialen Verschieben der Schaltmuffe ist zweckmäßigerweise eine erste Schaltgabel vorgesehen, welche in eine an einem Außenumfang der Schaltmuffe vorgesehene dritte Nut eingreift. - Die vorgeschlagene Konstruktion ist einfach und sie ermöglicht die kostengünstige Herstellung einer bistabilen Tellerfederkupplung. Die bei der vorgeschlagenen Tellerfederkupplung vorgesehenen Nuten können einstückig ausgestaltet sein. Es kann aber auch sein, dass eine oder mehrere Nuten jeweils eine Baugruppe bilden. Beispielsweise kann eine oder mehrere Flanken einer Nut durch einen oder mehrere Federringe gebildet sein.

Bei einer alternativen Ausgestaltung der Tellerfederanordnung ist zum axialen Verschieben des zweiten Kupplungselements eine zweite Schaltgabel vorgesehen, welche einen an einem Außenumfang des zweiten Kupplungselements vorgesehenen umlaufenden Steg umgreift. - Die vorgeschlagene Konstruktion ist noch einfacher und ermöglicht eine noch kostengünstigere Herstellung einer bistabilen Tellerfederkupplung.

Nachfolgend werden Ausführungsbeispiele der Erfindung anhand der Zeichnungen näher erläutert. Es zeigen:

Fig. 1 eine teilweise aufgebrochene perspektivische Ansicht einer ersten Tellerfederkupplung im geschlossenen Zustand,

Fig. 2 die Tellerfederkupplung gemäß Fig. 1 im geöffneten Zustand,

Fig. 3 eine Schnittansicht gemäß Fig. 1,

Fig. 4 eine Schnittansicht gemäß Fig. 2,

Fig. 5 eine schematische Schnittansicht durch eine Tellerfeder,

Fig. 6 eine Schnittansicht durch eine zweite Tellerfederkupplung,

Fig. 7 eine erste perspektivische Ansicht der ersten Tellerfederkupplung,

Fig. 8 eine zweite perspektivische Ansicht der ersten Tellerfederkupplung,

Fig. 9 eine erste perspektivische Ansicht einer zweiten Tellerfederkupplung,

Fig. 10 eine zweite perspektivische Ansicht der zweiten Tellerfederkupplung gemäß Fig. 7,

Fig. 11a eine Tellerfederkennlinie,

Fig. 11b die Auslenkung der Tellerfeder gemäß Fig. 11a,

Fig. 12 ein erstes Prinzipschaltbild einer ersten Tellerfederkupplung im geschlossenen Zustand,

Fig. 13 das Prinzipschaltbild gemäß Fig. 12 im geöffneten Zustand,

Fig. 14 ein Prinzipschaltbild gemäß Fig. 12 einer ersten Tellerfederkupplung mit optionalen Elementen,

Fig. 15 ein zweites Prinzipschaltbild einer zweiten Tellerfederkupplung mit optionalen Elementen.

In den Figuren ist mit dem Bezugszeichen 1 eine erste Welle bezeichnet, an welcher ein erstes Kupplungselement 2 fest angebracht ist. Das erste Kupplungselement 2 ist hier als Konus ausgebildet. Mit dem Bezugszeichen 3 ist eine zweite Welle bezeichnet, von der sich ein Mitnehmer, z. B. eine Zahnscheibe 4, erstreckt. In die Zahnscheibe 4 greift ein zweites Kupplungselement 5 ein. Dadurch ist das zweite Kupplungselement 5 drehfest mit der zweiten Welle 3 verbunden. Es ist bezüglich der Zahnscheibe 4 bzw. der zweiten Welle 3 axial verschiebbar.

Mit dem Bezugszeichen 6 ist eine bistabile Tellerfeder bezeichnet, welche mit ihrem Innenumfang in eine an der ersten Welle vorgesehene erste Nut 7 eingreift. Die Tellerfeder 6 weist mehrere sich zu ihrem Innenumfang radial sich erstreckende Federzungen 6a auf. Die Tellerfeder 6 greift mit ihrem äußeren Umfangsrand in eine an einer Schaltmuffe 8 vorgesehene zweite Nut 9 ein. Mit dem Bezugszeichen 10 ist eine erste Schaltgabel bezeichnet, welche in eine an der Schaltmuffe 8 vorgesehene dritte Nut 11 eingreift.

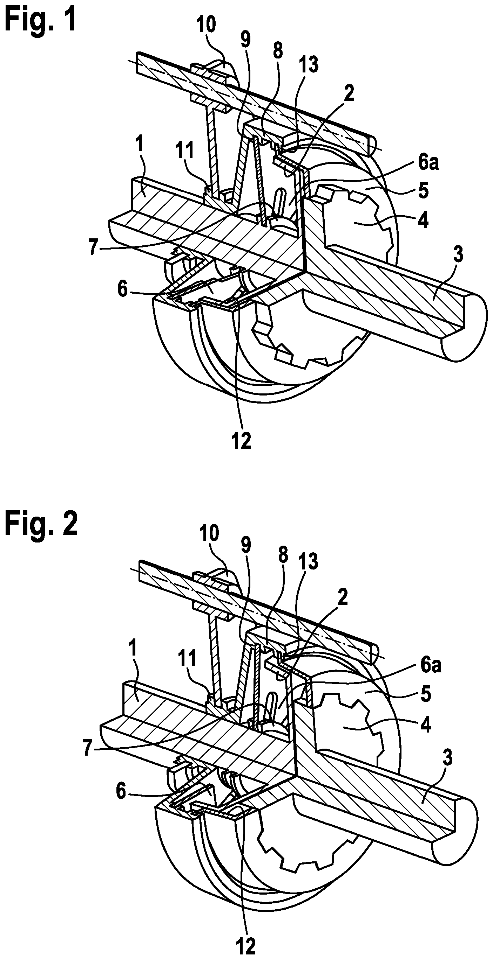

Das zweite Kupplungselement 5 ist als zum ersten Kupplungselement 2 korrespondierender Gegenkonus ausgebildet. Der Gegenkonus weist an seiner konischen Innenfläche einen Reibbelag 12 auf. Ein äußerer Umfangsrand des zweiten Kupplungselements 5 greift in eine an der Schaltmuffe 8 vorgesehene vierte Nut 13 ein. Die Funktion der in den Fig. 1 bis 4 gezeigten ersten Tellerfederkupplung ist folgende:

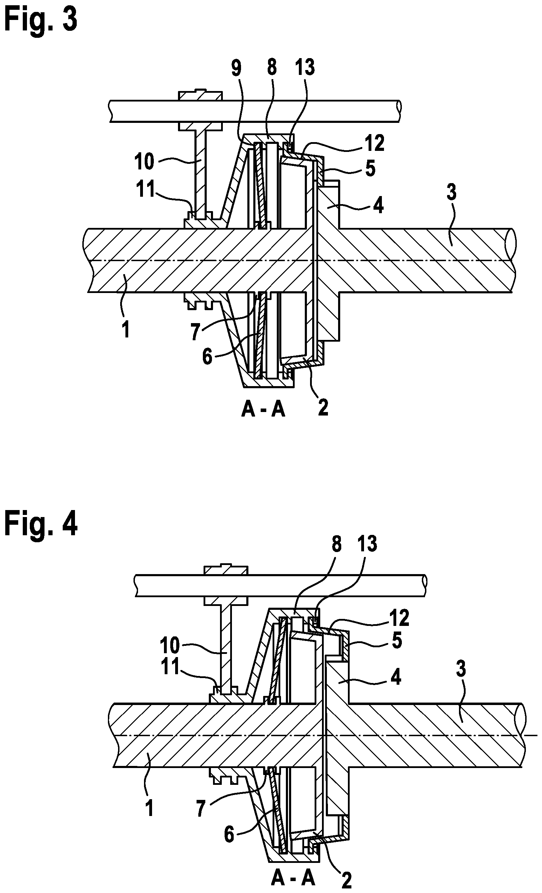

Im in den Fig. 1 und 3 gezeigten geschlossenen Zustand wird durch die Wirkung der Tellerfeder 6 das erste Kupplungselement 2 gegen das in der Schaltmuffe 8 gehaltene zweite Kupplungselement 5 gezwungen. Es wird eine reibschlüssige Verbindung zwischen dem ersten 2 und dem zweiten Kupplungselement 5 hergestellt. Infolgedessen kann ein Drehmoment von der ersten Welle 1 auf die zweite Welle 3 übertragen werden. Wenn ein vorgegebenes maximales Drehmoment überschritten wird, wird die reibschlüssige Verbindung zwischen dem ersten 2 und dem zweiten Kupplungselement 5 getrennt. Damit können unerwünschte Lastspitzen bei der Übertragung von Drehmomenten vermieden werden.

Die Fig. 2 und 4 zeigen die erste Tellerfederkupplung im geöffneten Zustand. Die erste Schaltgabel 10 sowie die Schaltmuffe 8 sind relativ zum ersten Kupplungselement 2 nach rechts verschoben. Die Tellerfeder 6 befindet sich in einem zweiten stabilen Zustand, bei dem das zweite Kupplungselement 5 ohne Einwirkung einer äußeren Kraft in einem vom ersten Kupplungselement 2 getrennten Zustand gehalten wird.

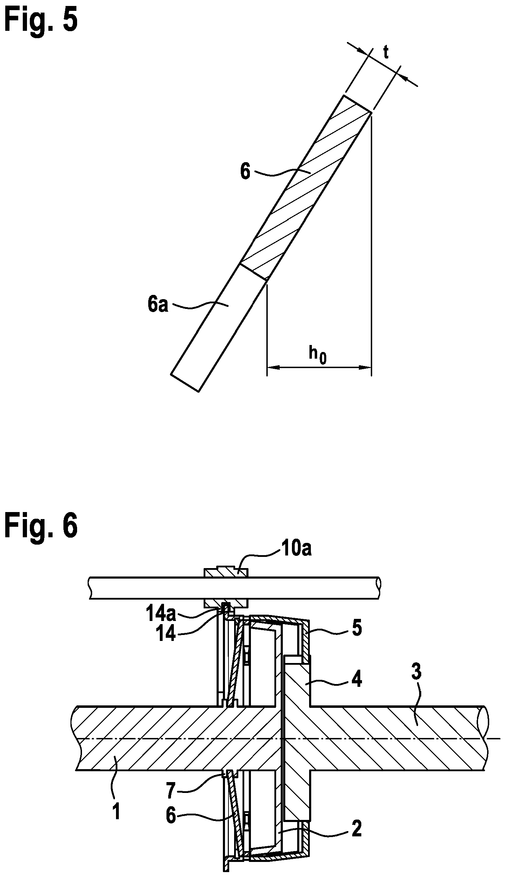

Fig. 5 zeigt die Materialdicke t der Tellerfeder 6 sowie die rechnerische Hilfsgröße $h_0$. Für die unbelastete Bauhöhe $l_0$ gilt:

$$l_0 = h_0 + t.$$

Fig. 6 zeigt eine Schnittansicht durch eine zweite Tellerfederkupplung. Bei der zweiten Tellerfederkupplung erstreckt sich vom zweiten Kupplungselement 5 radial nach außen ein umlaufender Steg 14. Der Steg 14 greift in eine fünfte Nut 14a ein, welche an einer zweiten Schaltgabel 10a vorgesehen ist.

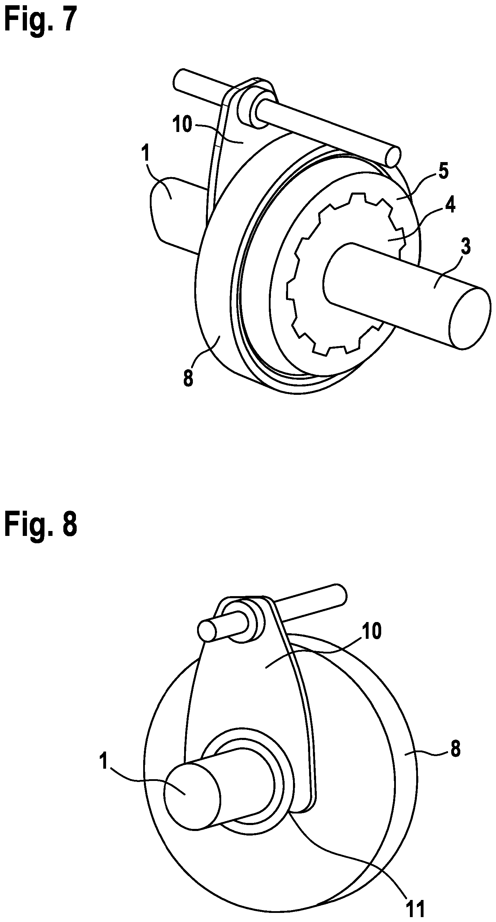

Die Fig. 7 und 8 zeigen weitere perspektivische Ansichten der ersten Tellerfederkupplung.

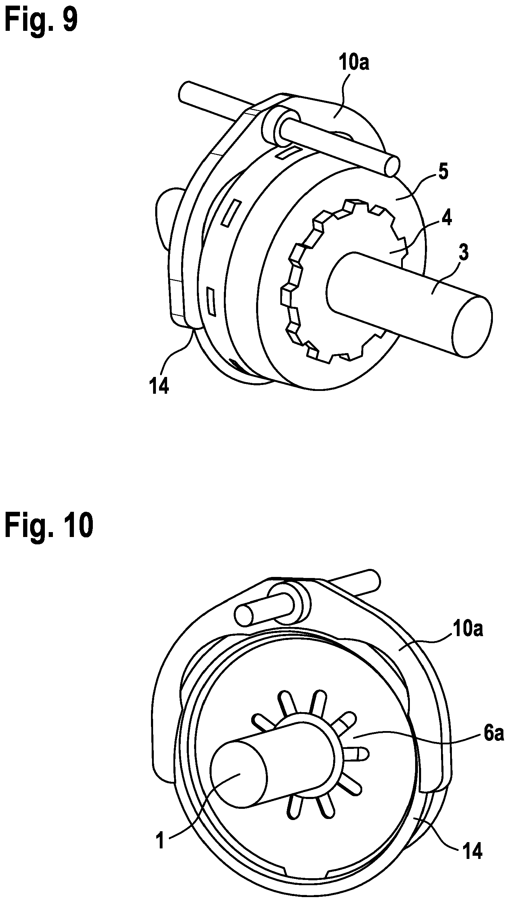

Die Fig. 9 und 10 zeigen perspektivische Ansichten einer zweiten Tellerfederkupplung. Die Ausgestaltung der zweiten Tellerfederkupplung unterscheidet sich von der ersten Tellerfederkupplung im Wesentlichen durch die Weglassung der Schaltmuffe 8. Die zweite Schaltgabel 10a weist an ihrer dem zweiten Kupplungselement 5 zugewandten Innenseite die fünfte Nut 14a (siehe Fig. 6) auf, welche den am Außenumfang des zweiten Kupplungselements 5 vorgesehenen umlaufenden Steg 14 umgreift.

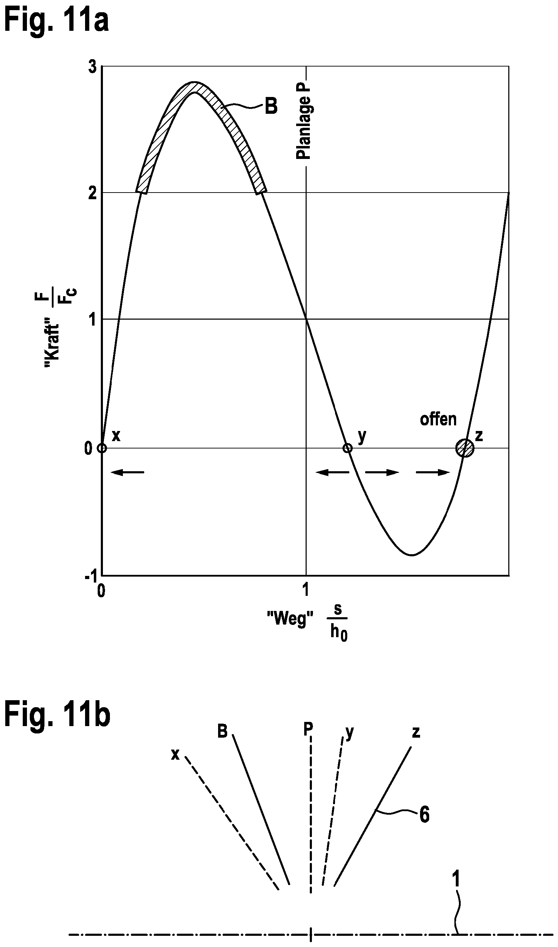

Fig. 11a zeigt eine Federkennlinie einer bistabilen Tellerfeder. Auf der x-Achse ist der Quotient aus dem Federweg s und einer rechnerischen Hilfsgröße $h_0$ aufgetragen. Für $h_0$ gilt: $h_0 = l_0 - t$, wobei $l_0$ die unbelastete Bauhöhe der Tellerfeder und t die Materialdicke der Tellerfeder ist (siehe auch Fig. 5). Auf der y-Achse ist der Quotient aus der positiven Kraft bzw. Druckkraft F der Tellerfeder und einer rechnerischen Kraft $F_C$ der Tellerfeder in Planlage aufgetragen. Beim Punkt "x" befindet sich die Tellerfeder in einem ersten stabilen Zustand. Wie aus Fig. 11a ersichtlich ist, ist zur Aufrechterhaltung des ersten stabilen Zustands keine äußere Kraft erforderlich. Zur Überführung der Tellerfeder in einen zweiten stabilen Zustand muss vom Punkt "x" bis zum Punkt "y" eine äußere Kraft aufgebracht werden. Im Bereich um das Maximum der Kraft befindet sich zweckmäßigerweise ein Betriebsbereich B im geschlossenen Zustand der Tellerfederkupplung. Im Punkt "y" herrscht ein labiles Gleichgewicht. Ab dem Punkt "y" wechselt bzw. schnappt die Tellerfeder in einen zweiten stabilen Zustand. Die Tellerfeder erzeugt dabei eine negative Kraft bzw. Zugkraft. Bei Erreichen des Punkts "z" befindet sich die Tellerfeder in einem zweiten stabilen Zustand, welcher ohne Aufbringen einer äußeren Kraft aufrechterhalten wird. Die Tellerfederkupplung befindet sich bei Erreichen des zweiten stabilen Zustands der Tellerfeder im geöffneten Zustand.

Fig. 11b zeigt zur Verdeutlichung der Federkennlinie in Fig. 11a die Stellung der Tellerfeder 6 bezüglich der ersten Welle 1. Der Punkt x wird nicht erreicht, weil sich die Tellerfederkupplung im Betriebsbereich B im geschlossenen Zustand befindet.

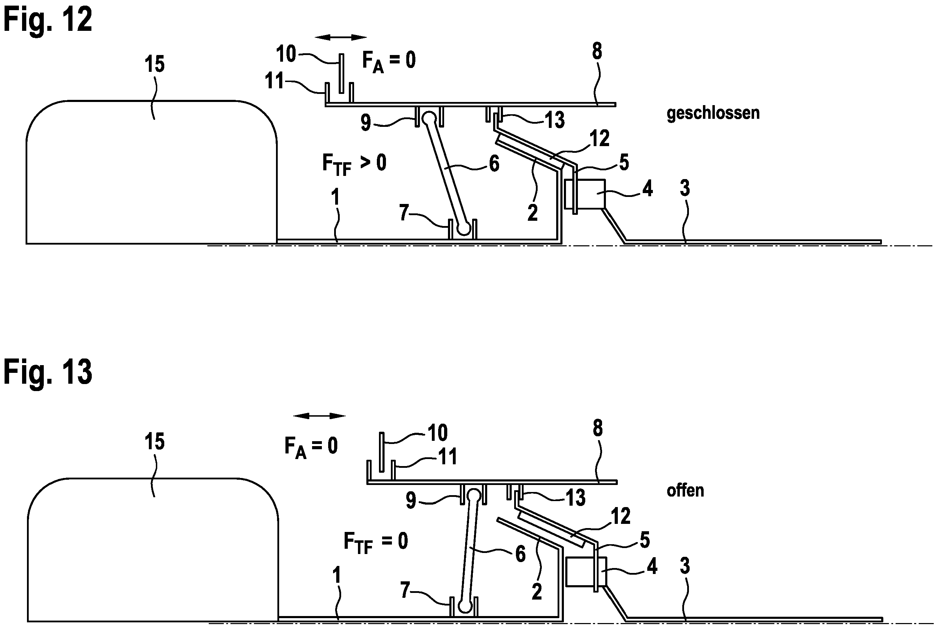

Die Fig. 12 und 13 zeigen erste Prinzipschaltbilder der vorgeschlagenen ersten Tellerfederkupplung. In den Fig. 12 und 13 sind wiederum für die bereits gezeigten Bestandteile dieselben Bezugszeichen verwendet worden. Das Bezugszeichen 15 bezeichnet ein Antriebsaggregat, beispielsweise einen Elektromotor. Die erste Welle 1 bildet hier eine Antriebswelle des Antriebsaggregats 15. Die zweite Welle 3 ist als Abtriebswelle ausgebildet. Bei dem in Fig. 12 gezeigten geschlossenen Zustand der ersten Tellerfederkupplung übt die Tellerfeder 6 über die Schaltmuffe 8 eine Kraft auf das zweite Kupplungselement 5 aus, so dass dieses in einen reibschlüssigen Kontakt mit dem ersten Kupplungselement 2 gezwungen wird. Zur Aufrechterhaltung des geschlossenen Zustands muss mittels der ersten Schaltgabel 10 keine äußere Kraft aufgewendet werden.

Bei dem in Fig. 13 gezeigten geöffneten Zustand der ersten Tellerfederkupplung befindet sich die Tellerfeder 2 im zweiten stabilen Zustand. Zur Aufrechterhaltung dieses Zustands muss wiederum keine äußere Kraft mittels der ersten Schaltgabel 10 auf die Schaltmuffe 8 ausgeübt werden.

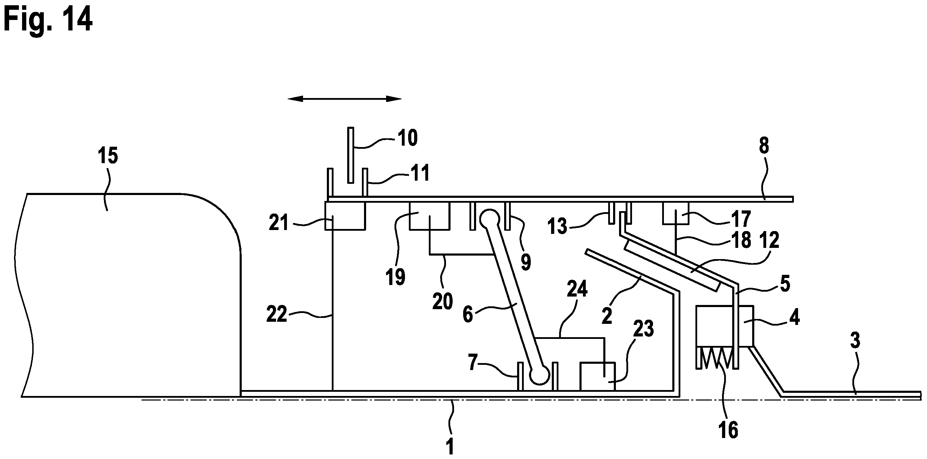

Fig. 14 zeigt ein weiteres Prinzipschaltbild der ersten Tellerfederkupplung. Im weiteren Prinzipschaltbild sind zusätzliche optionale Merkmale gezeigt. Das Bezugszeichen 16 bezeichnet eine Rückholfeder, welche als Führungselement und zur korrekten Positionierung des zweiten Kupplungselements 5 dient. Die Rückholfeder 16 ist hier als Druckfeder ausgeführt. Sie kann selbstverständlich auch als Zugfeder ausgeführt sein. Die Zahnscheibe 4 bildet einen Mitnehmer.

Mit dem Bezugszeichen 17 ist ein erster Mitnehmer bezeichnet, welcher optional zum Halten des zweiten Kupplungselements 5 an der Schaltmuffe 8 in Umfangsrichtung vorgesehen sein kann. In den ersten Mitnehmer 17 greift ein sich vom zweiten Kupplungselement 5 erstreckendes erstes Mitnehmerelement 18 so ein, dass eine drehfeste Verbindung zwischen dem zweiten Kupplungselement 5 und der Schaltmuffe 8 gebildet wird.

Mit dem Bezugszeichen 19 ist ein zweiter Mitnehmer bezeichnet, welcher optional zum Halten der zweiten Tellerfeder 6 an der Schaltmuffe 8 in Umfangsrichtung vorgesehen sein kann. In den zweiten Mitnehmer 19 greift ein zweites Mitnehmerelement 20 ein, wodurch eine drehfeste Verbindung zwischen der Tellerfeder 6 und der Schaltmuffe 8 gebildet wird.

Mit dem Bezugszeichen 21 ist ein dritter Mitnehmer bezeichnet, in den ein sich vom ersten Kupplungselement 2 erstreckendes drittes Mitnehmerelement 22 eingreift, wodurch eine drehfeste Verbindung zwischen dem ersten Kupplungselement 2 und der Schaltmuffe 8 gebildet wird. Bei dieser Ausgestaltung handelt es sich um eine Alternative zu der Anordnung aus dem ersten Mitnehmer 17 und dem ersten Mitnehmerelement 18.

Mit dem Bezugszeichen 23 ist ein vierter Mitnehmer bezeichnet, in den ein viertes Mitnehmerelement 24 eingreift. Das vierte Mitnehmerelement 24 erstreckt sich von der Tellerfeder 6. Durch den vierten Mitnehmer 23 und das vierte Mitnehmerelement 24 wird eine drehfeste Verbindung zwischen der Tellerfeder 6 und dem ersten Kupplungselement 2 gebildet. Die Anordnung aus dem vierten Mitnehmer 23 und dem vierten Mitnehmerelement 24 bildet eine Alternative zu der Anordnung aus dem zweiten Mitnehmer 19 und dem zweiten Mitnehmerelement 20.

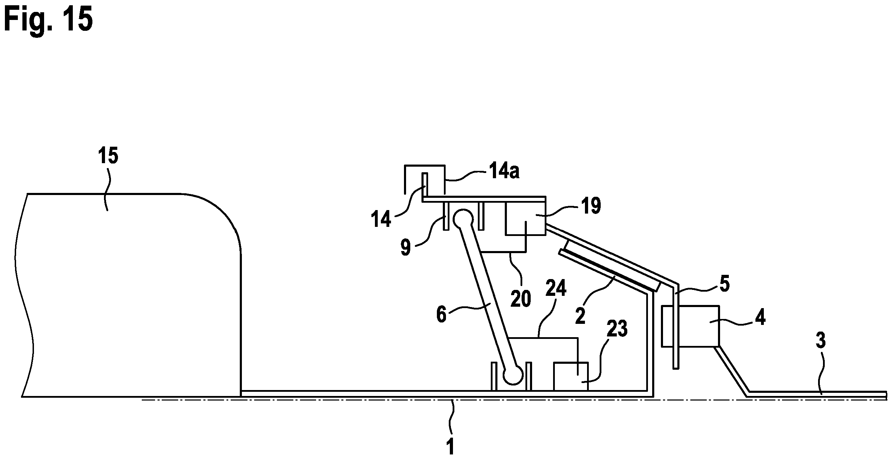

Fig. 15 zeigt ein zweites Prinzipschaltbild der zweiten Tellerfederkupplung im geschlossenen Zustand. Bei der zweiten Tellerfederkupplung ist die Schaltmuffe 8 weggelassen. Vom zweiten Kupplungselement 5 erstreckt sich der Steg 14, welche in eine an der (hier nicht gezeigten) zweiten Schaltgabel vorgesehene fünfte Nut 14a eingreift. Ähnlich wie bei den in Fig. 14 gezeigten Optionen kann auch bei der zweiten Tellerfederkupplung die Tellerfeder 6 alternativ drehfest mittels eines zweiten Mitnehmers 19 und eines zweiten Mitnehmerelements 20 mit dem zweiten Kupplungselement 5 oder mit dem vierten Mitnehmer 23 und dem vierten Mitnehmerelement 24 mit dem ersten Kupplungselement 2 verbunden sein.

## Bezugszeichenliste

| | |
|---|---|
| 1 | erste Welle |
| 2 | erstes Kupplungselement |
| 3 | zweite Welle |
| 4 | Zahnscheibe |
| 5 | zweites Kupplungselement |
| 6 | Tellerfeder |
| 6a | Federzunge |
| 7 | erste Nut |
| 8 | Schaltmuffe |
| 9 | zweite Nut |
| 10 | erste Schaltgabel |
| 10a | zweite Schaltgabel |
| 11 | dritte Nut |
| 12 | Reibbelag |
| 13 | vierte Nut |
| 14 | Steg |
| 14a | fünfte Nut |
| 15 | Antriebsaggregat |
| 16 | Rückholfeder |
| 17 | erster Mitnehmer |
| 18 | erstes Mitnehmerelement |
| 19 | zweiter Mitnehmer |
| 20 | zweites Mitnehmerelement |
| 21 | dritter Mitnehmer |
| 22 | drittes Mitnehmerelement |
| 23 | vierter Mitnehmer |
| 24 | viertes Mitnehmerelement |

## Patentansprüche

1. Tellerfederkupplung zum wahlweisen Verbinden einer ersten (1) und einer zweiten Welle (3), insbesondere einer Antriebs- und einer Abtriebswelle, umfassend eine bistabile Tellerfederanordnung , mit welcher ohne Aufbringung einer äußeren Kraft sowohl ein eine kraftschlüssige Verbindung zwischen den beiden Wellen (1, 3) herstellender geschlossener Zustand als auch ein die beiden Wellen (1, 3) voneinander trennender geöffneter Zustand aufrechterhalten wird, wobei an der ersten Welle (1) ein erstes Kupplungselement (2) fest angebracht ist und mit der zweiten Welle (3) ein zweites Kupplungselement (5) drehfest und axial verschiebbar verbunden ist, wobei die Tellerfederanordnung zumindest eine Tellerfeder (6) umfasst, **dadurch gekennzeichnet, dass** ein innerer Umfangsrand der Tellerfeder (6) in einer an der ersten Welle (1) vorgesehenen ersten Nut (7) drehbar gehalten ist, wobei ein äußerer Umfangsrand der Tellerfeder (6) in einer an einer Schaltmuffe (8) vorgesehenen zweiten Nut (9) gehalten ist, wobei an der Schaltmuffe (8) ein Mitnehmer (19) zum Halten der Tellerfeder (6) in Umfangsrichtung vorgesehen ist, und wobei in den Mitnehmer (19) ein Mitnehmerelement (20) eingreift, wodurch (i) eine drehfeste Verbindung zwischen der Tellerfeder (6) und der Schaltmuffe (8) gebildet wird, oder (ii) die Tellerfeder (6) drehfest mittels eines Mitnehmers (19) und eines Mitnehmerelements (20) mit dem zweiten Kupplungselement (5) verbunden ist.

2. Tellerfederkupplung nach Anspruch 1, wobei für die Tellerfeder (6) folgende Beziehung gilt:

$$h_0/t > 2,83,$$

wobei t eine Materialdicke der Tellerfeder (6) und $h_0$ eine rechnerische Hilfsgröße ist, für die gilt: $h_0 = l_0 - t$,
wobei $l_0$ eine unbelastete Bauhöhe der Tellerfeder (6) ist.

3. Tellerfederkupplung nach einem der vorhergehenden Ansprüche,
wobei die Tellerfeder (6) mehrere sich zu ihrem Innen- oder Außenumfang radial erstreckende Federzungen (6a) aufweist.

4. Tellerfederkupplung nach einem der vorhergehenden Ansprüche,
wobei das an der ersten Welle (1) angebrachte erste Kupplungselement (2) als Konus und das an der zweiten Welle (3) angebrachte zweite Kupplungselement (5) als zum Konus korrespondierender Gegenkonus ausgebildet ist.

5. Tellerfederkupplung nach einem der Ansprüche 1 bis 3,
wobei das an der ersten Welle (1) angebrachte erste Kupplungselement (2) als Scheibe und das an der zweiten Welle (3) angebrachte zweite Kupplungselement (5) als zur Scheibe korrespondierende Gegenscheibe ausgebildet ist.

6. Tellerfederkupplung nach einem der vorhergehenden Ansprüche,
wobei am ersten (2) und/oder zweiten Kupplungselement (5) ein Reibbelag (12) angebracht ist.

7. Tellerfederkupplung nach einem der vorhergehenden Ansprüche,
wobei die Schaltmuffe (8) mit dem zweiten Kupplungselement (5) verbunden ist.

8. Tellerfederkupplung nach einem der vorhergehenden Ansprüche,
wobei zum axialen Verschieben der Schaltmuffe (8) eine erste Schaltgabel (10) vorgesehen ist, welche in eine an einem Außenumfang der Schaltmuffe (8) vorgesehene dritte Nut (11, 14) eingreift.

9. Tellerfederkupplung nach einem der Ansprüche 1 bis 7,
wobei zum axialen Verschieben des zweiten Kupplungselements (5) eine zweite Schaltgabel (10a) vorgesehen ist, welche einen an einem Außenumfang des zweiten Kupplungselements (5) vorgesehenen umlaufenden Steg (14) umgreift.

**Claims**

1. Diaphragm spring clutch for selectively connecting a first (1) and a second shaft (3), in particular a drive shaft and an output shaft, comprising a bistable diaphragm spring arrangement, by means of which, without application of an external force, both a closed state establishing a force-fitting connection between the two shafts (1, 3) and an open state disconnecting the two shafts (1, 3) from one another are maintained, wherein a first clutch element (2) is fixedly attached to the first shaft (1) and a second clutch element (5) is connected to the second shaft (3) fixedly for conjoint rotation and axially displaceably, wherein the diaphragm spring arrangement comprises at least one diaphragm spring (6), **characterized in that** an inner circumferential edge of the diaphragm spring (6) is rotatably held in a first groove (7) provided on the first shaft (1), wherein an outer circumferential edge of the diaphragm spring (6) is held in a second groove (9) provided on a sliding clutch (8), wherein a driver (19) for holding the diaphragm spring (6) in the circumferential direction is provided on the sliding clutch (8), and wherein a driver element (20) engages in the driver (19), as a result of which (i) a rotationally fixed connection is formed between the diaphragm spring (6) and the sliding clutch (8), or (ii) the diaphragm spring (6) is connected to the second clutch element (5) fixedly for conjoint rotation by means of a driver (19) and a driver element (20).

2. Diaphragm spring clutch according to Claim 1, wherein the following relationship applies to the diaphragm spring (6):

$$h_0/t > 2.83,$$

where t is a material thickness of the diaphragm spring (6) and $h_0$ is a computational auxiliary variable, for which: $h_0 = l_0 - t$,
where $l_0$ is an unloaded overall height of the diaphragm spring (6).

3. Diaphragm spring clutch according to either of the preceding claims,
wherein the diaphragm spring (6) has a plurality of spring tongues (6a) which extend radially with respect to its inner or outer circumference.

4. Diaphragm spring clutch according to one of the preceding claims,
wherein the first clutch element (2) attached to the first shaft (1) is designed as a cone and the second clutch element (5) attached to the second shaft (3) is designed as a counter-cone corresponding to the cone.

**5.** Diaphragm spring clutch according to one of Claims 1 to 3,

wherein the first clutch element (2) attached to the first shaft (1) is designed as a disc and the second clutch element (5) attached to the second shaft (3) is designed as a counter-disc corresponding to the disc.

**6.** Diaphragm spring clutch according to one of the preceding claims,

wherein a friction lining (12) is attached to the first (2) and/or second clutch element (5).

**7.** Diaphragm spring clutch according to one of the preceding claims,

wherein the sliding clutch (8) is connected to the second clutch element (5).

**8.** Diaphragm spring clutch according to one of the preceding claims,

wherein, for the axial displacement of the sliding clutch (8), a first shift fork (10) is provided which engages in a third groove (11, 14) provided on an outer circumference of the sliding clutch (8).

**9.** Diaphragm spring clutch according to one of Claims 1 to 7,

wherein, for the axial displacement of the second clutch element (5), a second shift fork (10a) is provided which engages around a circumferential web (14) provided on an outer circumference of the second clutch element (5).

**Revendications**

**1.** Accouplement à rondelle-ressort pour relier au choix un premier arbre (1) et un deuxième arbre (3), notamment un arbre d'entrée et un arbre de sortie, comprenant un agencement à rondelle-ressort bistable avec lequel, sans application d'une force extérieure, on maintient aussi bien un état fermé établissant une liaison par adhérence entre les deux arbres (1, 3) qu'un état ouvert séparant les deux arbres (1, 3) l'un de l'autre, un premier élément d'accouplement (2) étant monté fixement sur le premier arbre (1) et un deuxième élément d'accouplement (5) étant relié au deuxième arbre (3) de manière solidaire en rotation et déplaçable axialement, l'agencement à rondelle-ressort comprenant au moins une rondelle-ressort (6), **caractérisé en ce qu'**un bord périphérique intérieur de la rondelle-ressort (6) est maintenu de manière rotative dans une première rainure (7) prévue sur le premier arbre (1), un bord périphérique extérieur de la rondelle-ressort (6) étant maintenu dans une deuxième rainure (9) prévue sur un manchon de commutation (8), un entraîneur (19) étant prévu sur le manchon de commutation (8) pour maintenir la rondelle-ressort (6) dans la direction périphérique, et un élément d'entraînement (20) s'engageant dans l'entraîneur (19), ce qui permet (i) de former une liaison solidaire en rotation entre la rondelle-ressort (6) et le manchon de commutation (8), ou (ii) de relier la rondelle-ressort (6) de manière solidaire en rotation au deuxième élément d'accouplement (5) au moyen d'un entraîneur (19) et d'un élément d'entraînement (20).

**2.** Accouplement à rondelle-ressort selon la revendication 1,

dans lequel la relation suivante est valable pour la rondelle-ressort (6) :

$$h_0/t > 2,83,$$

où t est une épaisseur de matériau de la rondelle-ressort (6) et $h_0$ est une grandeur auxiliaire de calcul pour laquelle on a : $h_0 = l_0 - t$, où $l_0$ est une hauteur de construction non sollicitée de la rondelle-ressort (6).

**3.** Accouplement à rondelle-ressort selon l'une quelconque des revendications précédentes, dans lequel la rondelle-ressort (6) présente plusieurs languettes élastiques (6a) s'étendant radialement vers sa périphérie intérieure ou extérieure.

**4.** Accouplement à rondelle-ressort selon l'une quelconque des revendications précédentes, dans lequel le premier élément d'accouplement (2) monté sur le premier arbre (1) est configuré sous forme de cône et le deuxième élément d'accouplement (5) monté sur le deuxième arbre (3) est configuré sous forme de contrecône correspondant au cône.

**5.** Accouplement à rondelle-ressort selon l'une quelconque des revendications 1 à 3, dans lequel le premier élément d'accouplement (2) monté sur le premier arbre (1) est configuré sous forme de disque et le deuxième élément d'accouplement (5) monté sur le deuxième arbre (3) est configuré sous forme de contre-disque correspondant au disque.

**6.** Accouplement à rondelle-ressort selon l'une quelconque des revendications précédentes, dans lequel une garniture de friction (12) est montée sur le premier (2) et/ou le deuxième élément d'accouplement (5).

**7.** Accouplement à rondelle-ressort selon l'une quelconque des revendications précédentes, dans lequel le manchon de commutation (8) est relié au deuxième élément d'accouplement (5).

8. Accouplement à rondelle-ressort selon l'une quelconque des revendications précédentes,
dans lequel, pour le déplacement axial du manchon de commutation (8), il est prévu une première fourchette de commutation (10) qui s'engage dans une troisième rainure (11, 14) prévue sur une périphérie extérieure du manchon de commutation (8).

9. Accouplement à rondelle-ressort selon l'une quelconque des revendications 1 à 7,
dans lequel, pour le déplacement axial du deuxième élément d'accouplement (5), il est prévu une deuxième fourchette de commutation (10a) qui entoure une nervure circonférentielle (14) prévue sur une périphérie extérieure du deuxième élément d'accouplement (5).

# Fig. 1

# Fig. 2

EP 4 118 354 B1

# Fig. 3

A - A

# Fig. 4

A - A

10

# Fig. 5

# Fig. 6

# Fig. 7

# Fig. 8

# Fig. 9

# Fig. 10

# Fig. 11a

# Fig. 11b

Fig. 12

geschlossen

$F_A = 0$

$F_{TF} > 0$

8
12
5
4
3
13
2
6
9
10
11
1
15

Fig. 13

offen

$F_A = 0$

$F_{TF} = 0$

8
12
5
4
3
13
2
6
9
10
11
1
15

Fig. 14

# Fig. 15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014226520 A1
- DE 102016222739 A1
- US 2010304912 A1
- DE 102008002500 A1